# EUROPEAN PATENT SPECIFICATION

(11) **EP 1 260 468 B1**
(45) Date of publication and mention of the grant of the patent: **27.07.2005**
(21) Application number: 02076922.0
(22) Date of filing: 17.05.2002
(51) Int. Cl.: B65G 47/82

(54) **Dispenser**
Abgabeförderer
Convoyeur distributeur

(30) Priority: 18.05.2001 NL 1018103; 18.05.2001 NL 1018104
(43) Date of publication of application: 27.11.2002
(73) Proprietor: Hachmang Beheer B.V., 2211 VA Noordwijkerhout (NL)
(72) Inventor: Hachmang, Hendrikus Cornelis Nicolaas, 2211 VA Noordwijkerhout (NL)
(74) Representative: Ferguson, Alexander

(56) References cited:
- DE-A- 2 942 583
- DE-A- 4 341 926
- US-A- 5 275 275

## Description

The invention relates to a dispenser for dispensing articles, such as bulbs, to a next processing machine, such as a packing machine, as described in the preamble of claim 1. Such a dispenser is known from US-A-5.275.275.

Such a machine is known from Dutch patent application 1007957. The known machine comprises a conveyor chain onto which circle-cylindrical holders have been attached. The holders have a bottom flap that is rotatable about a vertical axis for movement from a position that closes off the holder to a dispensing position. The machine is provided with a stationary bottom plate preventing the product from falling out of the holder after the flap has been turned open and before the point of dispensing has been reached.

At the location of the point of dispensing, the conveyor chain is diverted according to a circular path, as a result of which the holder undergoes a rotation at that location without translation while the chain continues to run. As a result dispensing can take place more accurately.

To improve the dispensing of the products from the holders it is known to urge a ram from above into the holders. This may be necessary when the product might be sticky due to clay residues (in case of bulbs). The ram is positioned vertically having a hydraulic or pneumatic cylinder for drive. This requires room in vertical direction, and in case of vertical travels may necessitate a larger travel of the chain.

It is an object of the invention to improve on this.

From one aspect the invention to that end provides a device for dispensing articles to a processing machine for it, such as a packing machine, accordance with a conveyance track, a first station for dispensing the articles to the holders and a second station for dispensing the articles from the holders to the processing machine, the conveyor comprising a conveyor chain or the like and the holders being attached to the conveyor chain, the device further comprising an aid for driving the articles out of the holders at the location of the second station, which aid comprises a pusher formed by an elongate body which by means of drive means is moveable between a storage position having a small vertical size and a substantially vertical drive-out position having a vertically developed length.

Preferably the aid has been arranged within a horizontal course of the conveyor chain, so that the height of the conveyance track can remain limited.

Preferably the elongate body is a so-called cable caterpillar or drag chain. Such elongated elements may in stretched form transfer a pushing force and yet easily travel around in curves.

Preferably at the notched side the drag chain is provided with a tension belt attached to both ends of the drag chain. As a result a tensile stress can be exerted on the drag chain so that it remains straight. By tensioning the belt the buckle strength of the stretched part is increased, so that a possible transverse force exerted by the bulb to the lower end of the elongate body does not hamper a good drive-out action.

In an alternative embodiment the elongate body may preferably be rolled up in the storage position, so that also in horizontal direction little space is taken up.

The drive means preferably comprise a drive belt for engaging the elongate body for its rotation to either roll it up or to unroll it, thus making tightly rolling up possible.

Preferably use is made of an elongate body having an inherent tendency to take a hollow shape in cross-section, the hollow shape providing rigidity against bending outwards and buckling of the elongate body during engagement of the products is prevented.

Preferably the elongate body is steel band and preferably provided with a free drive-in end forming a thrust surface.

Preferably means are furthermore provided for scraping off the surface of the elongate body during its movement from the drive-out position to the storage position, so that clay residues and the like do not hinder the tightly rolling up.

Preferably the elongate body is rigid in longitudinal direction and bendable in transverse direction.

The invention will be elucidated on the basis of a number of exemplary embodiments shown in the attached drawings, in which:
Figure 1 is a schematic side view of a machine for supplying articles, particularly tubers, to a packing machine (not shown);
Figures 2A-C show a side view, an end view and a top view, respectively, of a holder for use in the machine of figure 1;
Figure 3 shows a cross-section of an aid for pushing the products accommodated in the holders out of the holders of the machine of figure 1 during dispensing the products; and
Figure 4 shows a cross-section of an alternative aid for pushing the products accommodated in the holders out of the holders of the machine of figure 1 during dispensing the products.

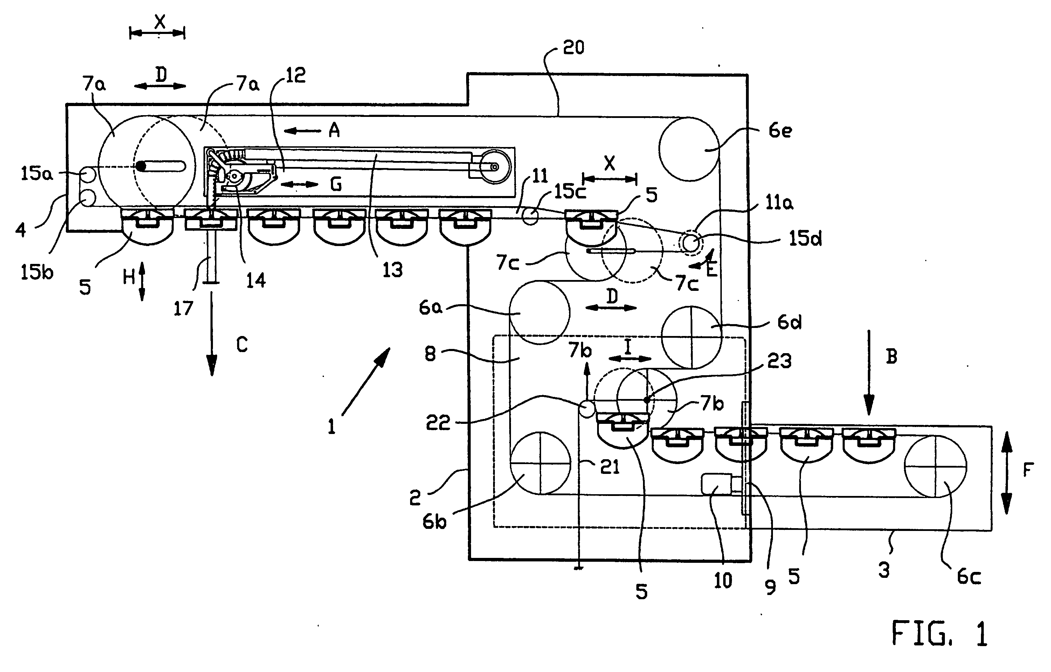

In figure 1 the machine 1 is shown, having a vertical main frame 2, a filler frame 3 extending horizontally from it and at its other side, an also horizontally extending dispenser frame 4.

Through the frames 2, 3 and 4, in a vertical plane, a conveyor chain or conveyor belt 20 runs, driven in direction A with drive means that are not further shown. The chain 20 here runs around a number of guiding rolls 6a,b,c,d,e and 7a,b,c, that may or may not be driven. Product holders 5 that are optionally supported in guides that are not further shown, are attached to the chain 20.

Above the filler frame 3 a supply location for supply in the direction B of articles, such as tubers, for instance dahlia tubers, to the holders 5 is positioned.

Below the dispenser frame 4 there is a filler chute 17 of a packing machine that is not further shown, such as a form-fill-seal machine, at which location the products can be dispensed in the direction C from a holder 5, which, as will be discussed, has a bottom that can be turned open.

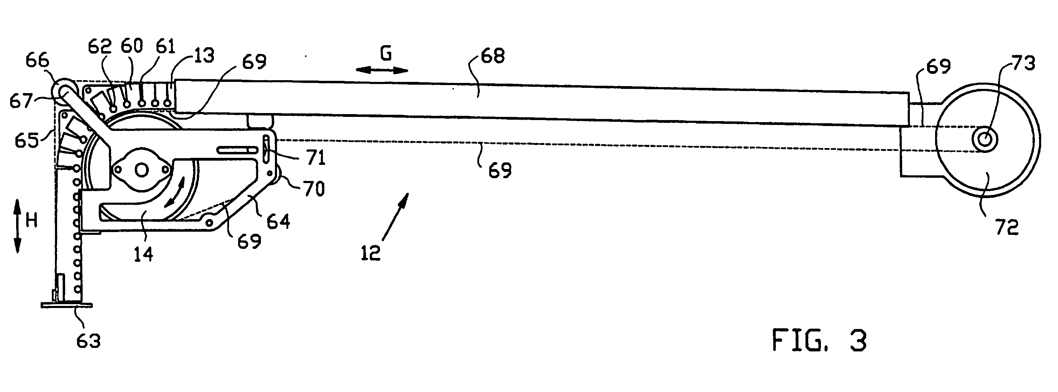

Just above the thus formed discharge station in the dispenser frame 4, within the tracks situated above each other of the chain 20, there is a casing 12 in which an elongate pusher 13 is accommodated. Said pusher 13 is moveable over driver/supporting roll 14 in the direction G, and will change from a horizontal direction over the roll 14 into a vertical direction H. This will be further gone into in the discussion of figure 3.

The rolls 6b, 7b and 6d have been arranged on an auxiliary frame 8, which is a permanent unit with the filler frame 3, in which the roll 6c has been attached. The combined frame 3, 8 is moveable up and down in the direction F, and to that end provided with a vertical rack 9, which is in engagement with a pinion which is driven by servomotor 10.

It is furthermore indicated that the rolls 7a and 7c are moveable in horizontal direction within horizontal guides shown. Shown are the ultimate positions. The rolls 7a and 7c are connected to each other with their axles by means of auxiliary chain 11, which is guided around stationary positioned guiding rolls 15a, 15b and 15c, as well as around roll 15d, which is driven by motor 11a. The motor 11a is reversible in order to drive the drive roll 15d in opposite directions E, and thus reciprocally moving the chain 11, and therewith the rolls 7a and 7c either to the left or to the right. It is noted that the axles of the rolls 7a and 7c can also be connected to each other by means of a rigid connection, such as a coupling bar, which in a suitable manner is reciprocally driven in order to achieve the desired displacement of the rolls 7a and 7c.

The rolls 7a and 7c form a mechanism with which it can be achieved that during dispensing the products from the holder 5 at the location of the dispensing station the holder 5 is kept still without the chain 20 having to be driven at another speed or having to be stopped.

To that end at the moment of dispensing the motor 11a is operated, as a result of which the drive roll 15d moves to the right and the chain 11 exerts a force directed to the left on the axle of the roll 7a, so that it is displaced from the dashed position over a distance X in the direction D to the left. The motor 11 a is operated such that the displacement of the roll 7a takes place at a speed that is half the speed of the chain 20. Due to the tension in the chain 20 the roll 7c is also urged in the direction D to the left, over a distance which is also X. The speed of movement of the roll 7c is equal to the one of the roll 7a.

With the speed of the movement to the left of the roll 7a of half a chain speed, it is achieved that the holder 5 at the location of the dispenser station is at a standstill. The dispensing can then take place completely under control, the products being able to fall exactly vertically into the packing machine. The motor 11 a is operated such that the drive of the roll 15d to the left is one and a half times the speed of the chain 20. Here the roll 7c is pulled from the position shown by a drawn line in the direction D to the right, in which due to the tension in the chain 20, the roll 7a is also urged from the drawn line position in the direction D to the right. Finally both rolls 7a and 7c take the position shown by means of striped lines.

Depending on by what means the products are supplied with and are transferred to the holders 5 at the location of the filler station near the filler frame 3, and depending on the degree of fragility of the products, it may be desirable to bring the filler frame 3 at a certain level for a certain charge.

To that end by means of servomotor 10 and pinion driven by it, the auxiliary frame 8 and the filler frame 3 attached to it are moved up or down, whatever is desired, via rack 9. However the vertical path of the chain 20 is changed here. In the situation shown in figure 1 the filler frame 3 is placed in a low position. In case of upward displacement of the frame 8/3 a length of chain will be left over. In order to prevent that the chain 20 will slacken, the roll 7b is also positioned so as to be horizontally moveable in the direction I. Simultaneously the roll 7a will be displaced in the direction J over a distance s. The means for displacing the roll 7b can be simple, and for instance a belt 21, which travels around the guiding roll 22 that is attached to the auxiliary frame 8 and with the one end is attached to a fixed point of the frame 1 and with the other end is connected to the axle 23 of the roll 7b.

When the motor 10 is operated, the rack 9 will be vertically displaced as a result of the engagement of the pinion in the tack 9. In this way the frame assembly 3/8 is also displaced vertically in the direction F. With the frame assembly 3/8 the rolls 6b, 6c, 6d and 7b as well as guide roll 22 move along. When the displacement is upward, the horizontal part of the belt 21 will have to be shortened about an extension of its vertical part, so that axle 23 of the roll 7b has to move to the left in the direction I. As a result more length is needed there for the chain 20, with which the shortening of the chain as a result of the approach in vertical direction of the rolls 6a and 6b on the one hand and the rolls 6d and 6e on the other hand is compensated. Thus the chain 20 remains at tension.

In case of downward movement in the direction F, the downwardly moving rolls 6b and 6d will want to increase the travel of the chain 20, which is made possible by the movement possibility of the roll 7b in the direction I to the left, urged by the tension in the chain 20.

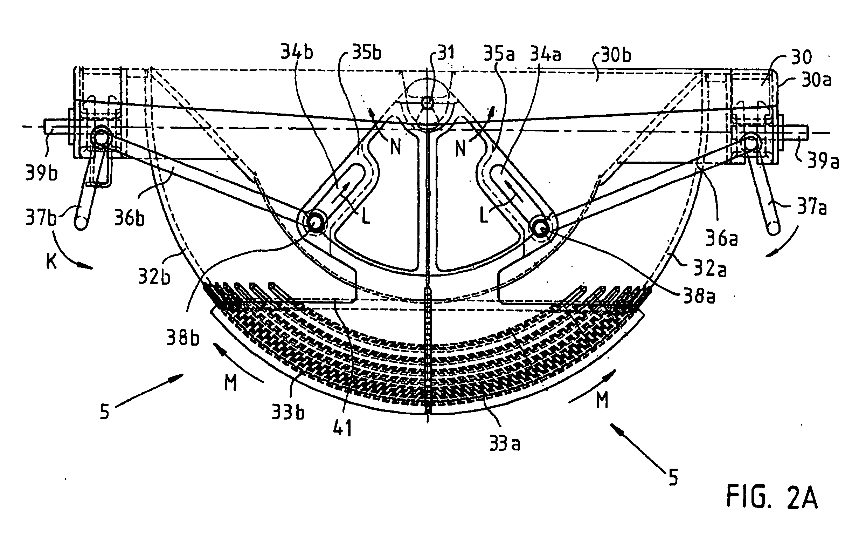

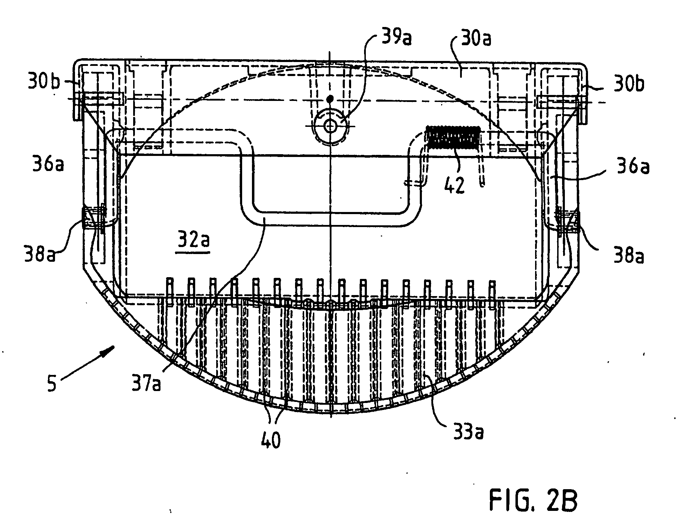

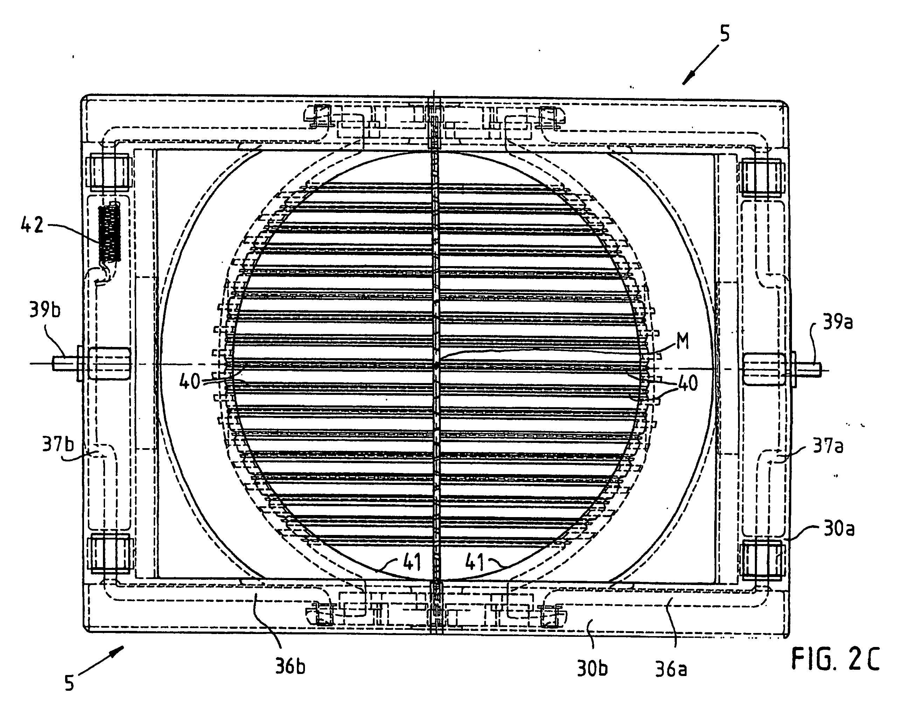

The holder 5 shown in the figures 2A-C is tray-shaped and may be manufactured of synthetic material. The holder 5 comprises frame 30, having short sides 30a and long sides 30b. They define a rectangular shape. As can be seen in figure 2a two shells 32a, 32b extend downward from the frame 30, which shells have centre of curvature M that is situated in the middle between hinges 31, on both longitudinal sides 30b. At their lower side both shells 32a, 32b define a circular vertically oriented hole 41. This hole 41 is closed off by two bottom members 33a, 33b which in longitudinal section in the middle have the same centre of curvature M, and as can be seen in figures 2B and 2C are more or less spherical.

At their upper edge both bottom members 33a, 33b have two arms 35a, 35b formed as a unity with it, which arms extend on either side near the longitudinal edges 30b, in order to be hingingly attached to the longitudinal edges 30b at the location of the hinge 31.

The arms 35a, 35b have been provided with longitudinal slits 34a, 34b which are also oriented in accordance with the radius about the hinge 31. In these longitudinal holes 34a, 34b transverse pin 38a, 38b has been accommodated, attached to lever arms 36a, 36b which also extend on either side of the holder 5, and at their other end (see figure 2C) run transversely under the transverse edges 30a, 30b to a bracket 37a, 37b (see figure 2B) which serves for engagement for operating the holder 5.

Both lever structures 36, 37 are at spring tension of a spring 42, only one of which is shown in figures 2A, 2C. By means of this spring 42 the pins 38a, 38b are downwardly pre-tensioned.

Finally it is noted that at the transverse edges 30a pins 39a, 39b have been provided, with which the holder 5 can be connected to conveyor chains positioned on either side of the holder 5.

Optionally the holder 5 can be provided with a vertical middle partition, in order to simultaneously transfer several products to a packing machine. It is also possible to use several dispenser stations, the bottom member 33a being turned away at the one station first, and the bottom member 33b in the next dispenser station.

For opening the bottom members 33a, 33b permanent guides have been provided in the machine 1, which guides are positioned to come into engagement with the bracket 37a, 37b and to pivot it in the direction K when dispensing is wanted. As a result the pins 38a, 38b will move in the direction L in the slit 34a, 34b and as a result cause a movement of the arms 35a, 35b in the direction N, due to which the bottom members 33a, 33b rotate in the direction M. When the bottom members 33a, 33b are turned open completely, their lower edges almost coincide with the opening 41 and a circular discharge opening is obtained. This is advantageous when use is made of a circle-cylindrical chute or filler tube for the packing machine.

The pusher mechanism 12 shown in figures 1 and 3 with push belt 13 takes up little space in the vertical sense. The pusher belt 13 can be compared to a generally known drag chain, formed by a series of rigid synthetic blocks 60, which are formed as a unity with each other and are separated from each other by means of cuts 61, but connected to each other by means of internal hinges 62, as can be seen in figure 3. The cuts 61 make it possible that the push belt 13 is able to follow a curvature, but in the stretched tracks is able to absorb a compression force. In the horizontal part the push belt 13 is supported in casing 68. The push belt 13 is driven by roll 14, in opposite directions. The roll 14 itself is bearing mounted in a rotatable manner in permanent frame 64, in which a guiding roll 70 and a tension roll 71 are also bearing mounted. A drive belt 69 is guided about the rolls, which belt at the other end is in driving engagement with a drive roll 73, which is driven by a motor 72 which is also stationary. As can be seen in figure 3 the belt runs from the drive roll 73 to the left, turns around tension roll 71, further around guiding roll 70, and for its drive, around support/drive roll 14, and then between the bottom of channel 68 and the bottom side of the push belt 13, to the right again to the drive roll 73.

At the other side a stretch and rigidity belt 65 is arranged on the push belt 13, and such that the belt 65 is attached at both ends at the ends of the push belt 13. In between the belt 65 is free. The belt 65 serves to stretch the push belt 13 and to keep it at compression pre-tension, so that it obtains an increased rigidity, and in the vertical part is purely stretched. By means of outrigger 67 and guide roll 66 bearing mounted at its end, the belt 65 is kept free from the push belt 13 in the turning area of the push belt 13, in order to prevent that the belt 65 gets jammed in the slits 61 when they are closing.

At the lower end the push belt 13 is provided with a pusher or ram 63, which is circle-cylindrical, fitting in the circular discharge opening of the holders 5.

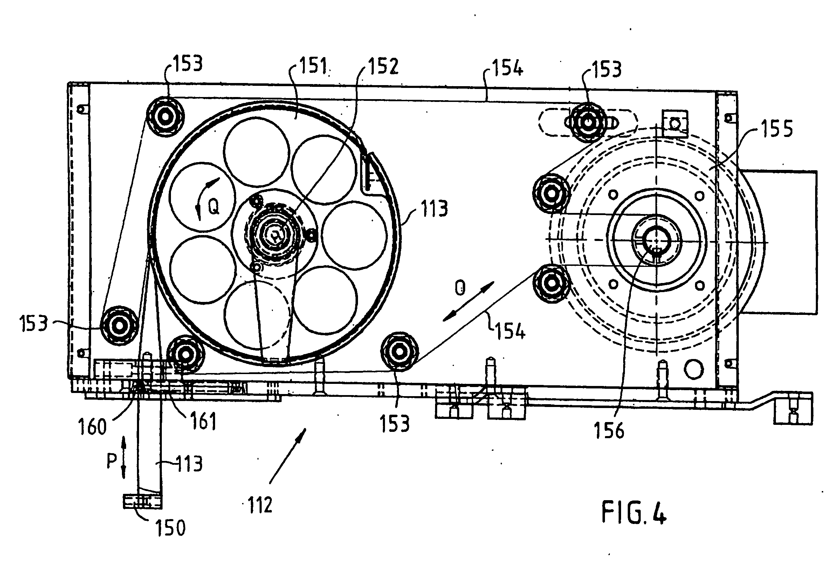

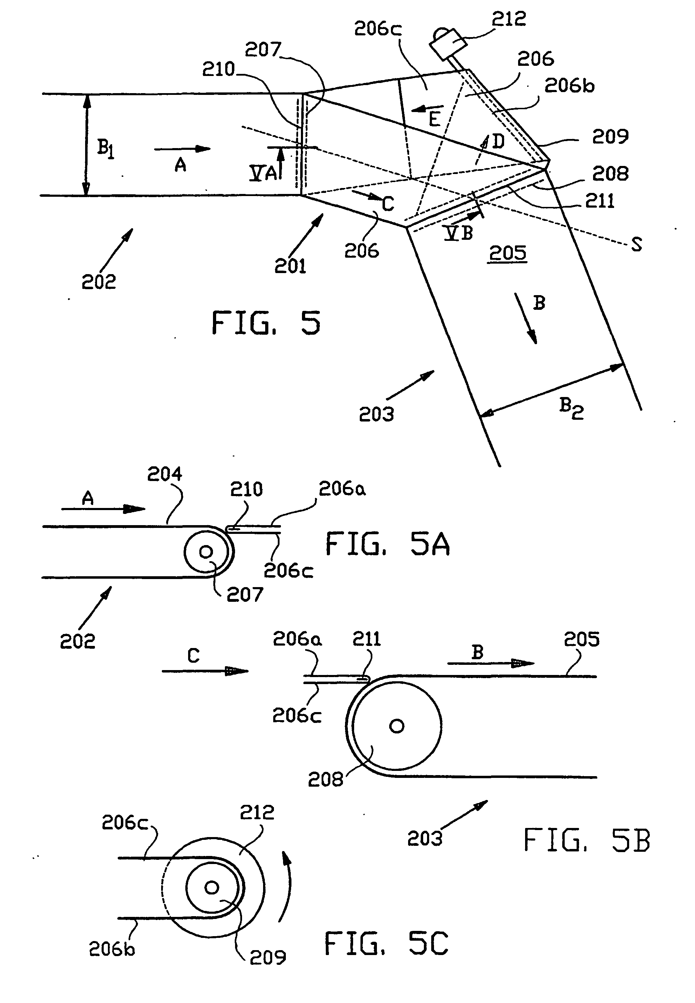

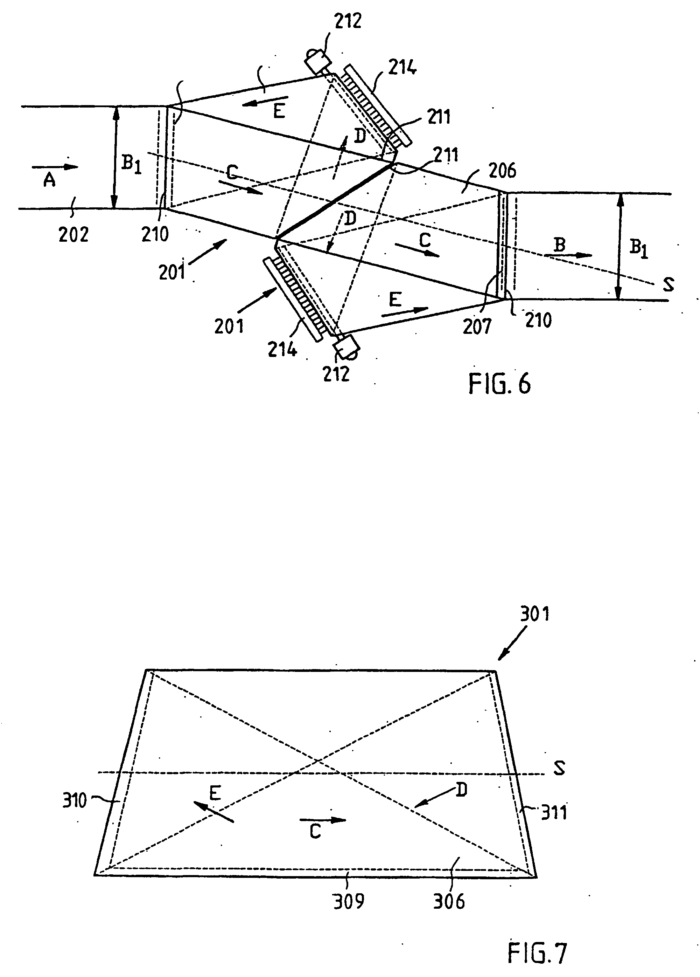

In an alternative embodiment, shown in figure 4, there is question of a casing 112, which can be placed above the dispenser station in the machine 1. The casing 112 is provided with a drum 151, which is rotatable about an axle 152. On the drum 151 a roll belt 113 is wound, which corresponds to the belt of a so-called measuring tape. At the end of the belt 113 a thruster 150 is provided, with which the products can be pushed out of the holder 5, should they get stuck in there or something like that. In the free position the belt 113 will have a U-shaped cross-section and be buckle resistant, yet it can be rolled up flat on the drum 151. As a result the space it takes up in horizontal direction is also limited.

For keeping the belt 113 flat against the drum and driving the drum 151 in order to discharge or haul in the belt 113, a drive belt 154 has been provided which runs around a number of rolls 153 and is driven by the driving shaft 156 of the servomotor 155. By driving the belt 154 in the direction O the drum 151 will be rotated in the direction Q and thus the push belt 113 will be vertically pushed down or hauled up in the direction P.

Guides 160 and 161 have been provided for orienting the belt 113 and scraping off the dirt on it when hauling in the belt 113.

## Claims

1. Device (1) for dispensing articles to a processing machine for it, such as a packing machine, comprising a conveyor (20) with holders (5) for the articles, travelling around in accordance with a conveyance track, a first station for dispensing the articles to the holders and a second station for dispensing the articles from the holders to the processing machine, the conveyor comprising a conveyor chain (20) or the like and the holders (5) being attached to the conveyor chain, the device further comprising an aid (12, 13; 112, 113) for driving the articles out of the holders (5) at the location of the second station, which aid comprises a pusher (13; 113) formed by an elongate body **characterized in that** the elongate body by means of drive means (14; 151) is moveable between a storage position having a small vertical size and a substantially vertical drive-out position having a vertically developed length.

2. Device according to claim 1, the aid (12; 112) being arranged within a horizontal course of the conveyor chain (20).

3. Device according to claim 1 or 2, the elongate body being a so-called cable caterpillar or drag chain (60), which preferably at the notched side is provided with a tension belt (65) attached to both ends of the drag chain.

4. Device according to claim 1 or 2, the elongate body (113) being rolled up in the storage position, the drive means preferably comprising a drive belt (154) for engaging the elongate body for its rotation to either roll it up or to unroll it.

5. Device according to claim 4, the elongate body (113) having an inherent tendency to take a hollow shape in cross-section.

6. Device according to claim 4 or 5, the elongate body (113) being steel band.

7. Device according to any one of the claims 1-6, the elongate body having a free drive-in end (63; 150) forming a thrust surface.

8. Device according to any one of the preceding claims, furthermore provided with means (161, 162) for scraping off the surface of the elongate body (113) during its movement from the drive-out position to the storage position.

9. Device according to any one of the preceding claims, in which the elongate body (13; 113) is rigid in longitudinal direction and bendable in transverse direction.

## Patentansprüche

1. Vorrichtung (1) zum Abgeben von Waren an eine Verarbeitungsmaschine dafür, wie eine Verpackungsmaschine, umfassend einen gemäß einer Förderbahn umlaufenden Förderer (20) mit Haltern (5) für die Waren, eine erste Station zum Abgeben der Waren an die Halter und eine zweite Station zum Abgeben der Waren aus den Haltern an die Verarbeitungsmaschine, wobei der Förderer eine Förderkette (20) oder etwas derartiges umfaßt und die Halter (15) an der Förderkette befestigt sind, wobei die Vorrichtung weiter ein Hilfsmittel (12,13; 112,113) umfaßt zum an Ort und Stelle der zweiten Station Treiben der Waren aus den Haltern (5), welches Hilfsmittel einen durch einen Längskörper gebildeten Schieber (13; 113) umfaßt, **dadurch gekennzeichnet, daß** der Längskörper durch Antriebsmittel (14; 151) zwischen einem Lagerstand mit einer geringen vertikalen Dimension und einem hauptsächlich vertikalen Austreibstand mit einer vertikalen entwickelten Länge versetzbar ist.

2. Vorrichtung nach Anspruch 1, wobei das Hilfsmittel (12; 112) innerhalb von einem horizontalen Lauf der Förderkette (20) angeordnet ist.

3. Vorrichtung nach Anspruch 1 oder 2, wobei der Längskörper eine sogenannte Kabelkette oder Schleppkette (60) ist, die vorzugsweise an der Einkerbungsseite mit einem an beiden Seite der Schleppkette befestigten Zugband (65) versehen ist.

4. Vorrichtung nach Anspruch 1 oder 2, wobei der Längskörper (113) in dem Lagerstand aufgerollt ist, wobei die Antriebsmittel vorzugsweise einen Antriebsband (154) umfassen zum für Rotation Angreifen des Längskörpers zum entweder Aufrollen oder Abrollen davon.

5. Vorrichtung nach Anspruch 4, wobei der Längskörper (113) eine inhärente Neigung hat zum Annehmen einer hohlen Form in Querdurchschnitt.

6. Vorrichtung nach Anspruch 4 oder 5, wobei der Längskörper (113) ein Stahlband ist.

7. Vorrichtung nach irgendeinem der Ansprüche 1-6, wobei der Längskörper ein freies Eintreibende (63; 150) hat, das eine Stoßfläche bildet.

8. Vorrichtung nach irgendeinem der vorhergehenden Ansprüche, weiter mit Mitteln (161,162) zum während Versetzung des Längskörpers (113) vom Austreibstand zum Lagerstand Abkratzen der Oberfläche davon, versehen.

9. Vorrichtung nach irgendeinem der vorhergehenden Ansprüche, wobei der Längskörper (13; 113) in Längsrichtung steif und in Querrichtung biegbar ist.

## Revendications

1. Dispositif (1) pour distribuer des articles à une machine de traitement, par exemple une machine de conditionnement, comprenant un convoyeur (20) avec des supports (5) pour les articles, se déplaçant selon une voie de transport, un premier poste pour distribuer les articles aux supports et un deuxième poste pour distribuer les articles depuis les supports vers la machine de traitement, le convoyeur comprenant une chaîne de convoyeur (20) ou un dispositif similaire et les supports (5) étant fixés à la chaîne de convoyeur, le dispositif comprenant, en outre, une aide (12, 13 ; 112, 113) pour enlever les articles des supports (5) à l'emplacement du deuxième poste, laquelle aide comprend un poussoir (13 ; 113) formé par un corps allongé, **caractérisé en ce que** le corps allongé est déplaçable à l'aide de moyens de commande (14 ; 151) entre une position de stockage ayant une petite dimension verticale et une position d'évacuation sensiblement verticale ayant une longueur développée verticalement.

2. Dispositif selon la revendication 1, l'aide (12 ; 112) étant disposée sur un parcours horizontal de la chaîne de convoyeur (20).

3. Dispositif selon la revendication 1 ou 2, le corps allongé étant ce que l'on appelle une chenille à câble ou une chaîne de traînage (60) qui est munie, de préférence du côté cranté, d'une courroie de tension (65) fixée aux deux extrémités de la chaîne de traînage.

4. Dispositif selon la revendication 1 ou 2, le corps allongé (113) étant enroulé dans la position de stockage, le moyen de commande comprenant, de préférence, une courroie d'entraînement (154) venant en prise dans le corps allongé pour le mettre en rotation soit pour l'enrouler soit pour le dérouler.

5. Dispositif selon la revendication 4, le corps allongé (113) ayant intrinsèquement tendance à prendre une forme creuse en section transversale.

6. Dispositif selon la revendication 4 ou 5, le corps allongé (112) étant bande en acier.

7. Dispositif selon l'une quelconque des revendications 1 à 6, le corps allongé ayant une extrémité d'introduction libre (63 ; 150) formant une surface de butée.

8. Dispositif selon l'une quelconque des revendications précédentes, muni, en outre, de moyens (161 ; 162) pour racler la surface du corps allongé (113) pendant son déplacement depuis la position d'évacuation vers la position de stockage.

9. Dispositif selon l'une quelconque des revendications précédentes, dans lequel le corps allongé (13 ; 113) est rigide dans la direction longitudinale et déformable dans la direction transversale.
